# EUROPEAN PATENT SPECIFICATION

(11) **EP 1 170 895 B1**
(45) Date of publication and mention of the grant of the patent: **13.08.2008**
(21) Application number: 00401898.2
(22) Date of filing: 03.07.2000
(51) Int. Cl.: H04J 14/02, H04B 10/18

(54) **Optical transmission system with reduced raman effect depletion.**
Optisches Übertagungssystem mit Verminderung der Ramaneffektserschöpfung
Système de transmission optique avec réduction de la déplétion due à l'effet raman

(43) Date of publication of application: 09.01.2002
(73) Proprietor: Alcatel Lucent, 75008 Paris (FR)
(72) Inventor: Chesnoy, José, 75014 Paris (FR); Blondel, Jean-Pierre, 78530 Buc (FR); Brandon, Eric, 92340 Bourg La Reine (FR); Labrunie, Laurent, 75002 Paris (FR); Toullier, Denis, 45400 Fleury les Aubrais (FR)
(74) Representative: Korakis-Ménager, Sophie

(56) References cited:
- EP-A- 0 749 224
- EP-A- 0 903 876
- WO-A-99/43107
- DE-A- 4 028 180

## Description

The invention proceeds from a transmission system using a wavelength division multiplex (WDM) scheme with transmitters, transmission line and receivers with means to multiplex and demultiplex optical signals of different wavelengths.

Furthermore the invention is concerned with a multiplexer for a WDM transmission system (1) with a number of signal channels (λ₁....λ_{N}) and one output channel connected to a transmission line.

Furthermore the invention is concerned with a method for reducing the effect of power depletion in a wavelength grid spectrum due to Raman effect in a WDM transmission system.

Optical wavelength-division multiplex (WDM) transmission systems are known in the prior art. They offer a good glass-fiber bandwidth utilization efficiency as a result of optical wavelength-division multiplexing (WDM). Under these circumstances, a number of modulated optical carriers, whose frequency differs, are transmitted simultaneously in a glass fiber. A separate laser is provided at the transmitting end for each channel. The optical signals of all the lasers are launched into a glass fiber with the aid of frequency-dependent coupling arrangements. The wavelengths are focused and also decoupled via an optical multiplexer or demultiplexer. In a network structure that uses wavelength-division multiplexing, optical add-drop modules are necessary at the network nodes for launching and extracting individual wavelength channels. In submarine transmission system the network node are located at the starting point of a submarine transmission line and at the end point of the line. In the line, regenerators might be implemented, whose purpose is to amplify and possibly regenerate the optical signal. Regenerators therefore generally contain means that serve to amplify the optical signal. In this connection, EDFA (erbium-doped fiber amplifiers), in particular, are used for the amplification. Furthermore, compensation for the dispersion effects that are caused by the transmitting fibers is undertaken in the transmission system. Here, dispersion-compensating fibers (DCF) are used.

In WDM transmission systems, Raman effect occurs in optical fibers. This effect can be observed when data signals with high power or high power pump signals are transmitted though the fiber. The Raman effect is a scattering process of a photon at a molecule oscillation. The energy level of the scattered photon is shifted to lower wavelength as a Stoke wavelength. The Raman shift depends only from the material, not from the exciting wavelength. With the coherent Raman effect a very effective amplification of the Stoke wavelengths occurs.

Considering the transmission of the two wavelength channels: The Raman effect induces an energy transfer from the channel with the short wavelength to the channel with the long wavelength. Consequently the power of the first channel decreases and in the same time the power level of the second channel increases. This power reduction for the short wavelength signal is called power depletion by Raman effect. The energy transfer is a maximal for a channel spacing of about 100 nm (in a 1550 nm range) in a silicon fiber. Following the ITU recommendation G. 692 several channel spacings are allowed for a wavelength division multiplex system. For general spacings of 50 GHz on a fiber the allowed channel frequencies are based on a 50 GHz grid with a reference frequency of 194,1 GHz. For channel spacings of 100 GHz or more on a fiber the allowed channel frequencies are based on a 100 GHz grid with a reference frequency at 193,1 THz. For these transmission systems, the channel spacing is one nanometer or less. The transfer of energy from one channel to the neighbor channel is far away from the maximum effect of Raman depletion. However when a large number of channels and/or a large signal power is considered, the Raman depletion can be significant enough and can reduce the system performances. The systems performances can be degraded by two effects: a power reduction of the shortest wavelengths of the wavelength grid by Raman depletion and degradation of the longest wavelength channels due to non-linear effects. These non-linear effects, occuring for large channel powers, are self-phase modulation, cross-phase modulation, Brillouin scattering, four-wave mixing and stimulated Raman scattering.

As a result of the Raman scattering, the transmitted wavelength grid spectrum is modified in such way that the power in the channels with the smallest wavelength is shifted to channels with longer wavelengths.

It is known to pre-emphasize the channels in the transmitted means to compensate the inter-channel depletion. This technique consists in an accurate adjustment of the channel power at the transmit side of the link. It is possible to launch the shortest wavelength channels with a larger power than the longest wavelength channels. Over the transmission line the power depletion due to Raman effect occurs and the receiver receives a compensated wavelength grid spectrum with equivalent power levels. This method requires high power levels for the channels with the shortest wavelength. Consequently these channels will be degraded by non-linear effects which will reduce the system performance. The objective of the invention is to avoid the effect of power depletion in the channels and to establish a good performance for all channels of a wavelength grid.

An optical fiber communication system with a distributed Roman amplifier and a remotely pumped Er-doped fiber amplifier is known from EP-A-0 903 876. The system comprises a remotely pumped erbium-doped fiber amplifier. The pump radiation is de-tuned with respect to wavelength, the wavelength being selected longer than both the optimal wavelengths for pumping the EDFA and for producing Raman gain in the Transmission fiber, respectively. Such de-tuning results in improved over-all system performance through reduced multi-path interference. This document however does not teach pump radiation in the direction of the signal transmission.

A multi-channel optical fiber communication system is known from EP-A-0 749 224 I which filters are used to compensate for wavelength dependence of crosstalk induced by stimulated-Raman-scattering. The present invention is not concerned with the use of filters for such compensation.

### Advantages of the invention

The proposed transmission system using a wavelength division multiplex scheme with a transmitter, a transmission line and receivers with means to multiplex and de-multiplex optical signals of different wavelengths contains one mean to counterbalance the depletion due to Roman shift. This transmission system has the advantage that the effects of depletion of power due to Ramaon shift decreases because a new special channel is established in which a pump light is fed into the transmission system. This has the advantage that the effect of depletion can actively be modified by Raman pumping.

The measures cited in the sub claims make possible advantages, developments and improvements of the transmission system, the multiplexer and the method as specified in the independent claims.

### Drawings

An exemplary embodiment of the invention is shown in the drawing and explained in the created detail in the description below. In the drawing
Figure 1 shows a diagrammatic representation of WDM system with Raman pump,
Figure 2 shows the Raman pumping scheme a and b,

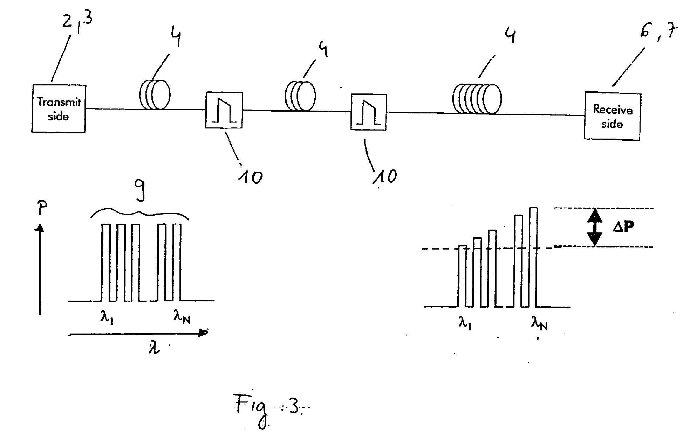

Figure 3 shows a second embodiment with in-line transmission filters.

### Description

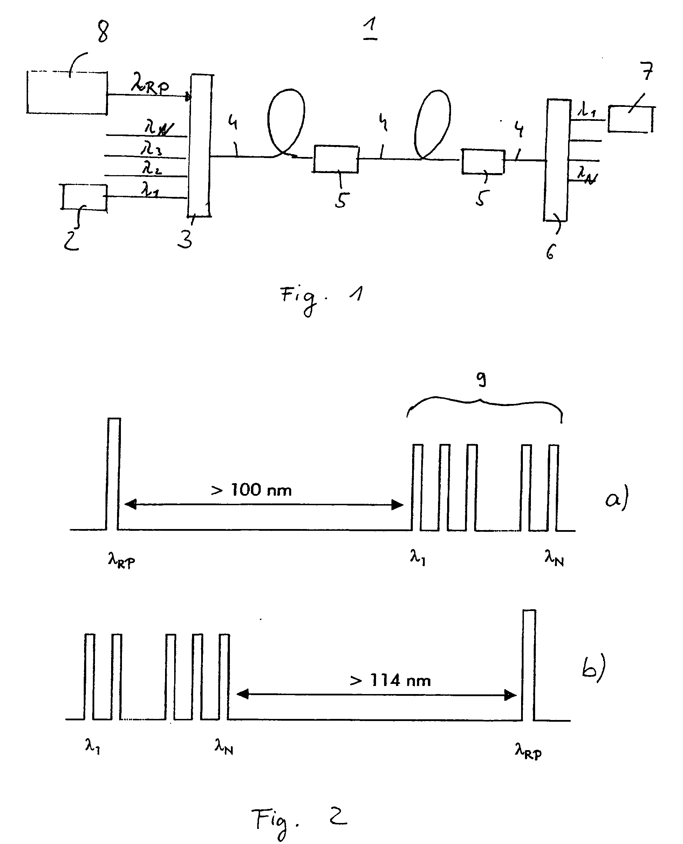

Figure 1 shows the diagrammatic structure of a DWM system (1). On the transmitting side a couple of transmitters (2) transmits lights of different wavelengths λ₁ to λₙ .The different wavelengths are launched into a multiplexer (3). The output of the multiplexer (3) is directly connected with the transmission line (4). The transmission line (4) may contains several regenerators (5). At the receiving side the light of the transmission line (4) is launched into a de-multiplexer (6). The output lines of the de-multiplexer (6) are connecting the several wavelengths λ₁ to λₙ to receivers (7). At the transmitter side, a Raman laser pump (8) is connected with the multiplexer (3). In another embodiment the Raman laser pump (8) is directly connected via a coupler with the transmission line (4).

It is known from US 5,959,750 to add Roman amplification to an existing transmission system to provide an increase in power budget and to permit substantial increase in transmission capacity. In this system the Raman pump source is provided at the receiving end of the fiber link. Raman pump source in prior art is working at a wavelength of 1453 nm to provide maximum gain over the total range of the wavelength. This system is not adapted to overcome the problems with Raman depletion in a wavelength grid.

In our invention, the Raman pump source is specially adapted to avoid Raman depletion of the wavelength grid. The Raman pump source is working in propagation direction of the transmission system. To use the Raman laser pump at the transmitting side decreases the problem with non-linearity effects in the transmission line. For the effects of Raman depletion and of Raman shift due to the Raman pumping working parallel the spectrum remains in a very harmonic power scheme.

Figure 2a shows a pumping scheme with a Raman pump wavelength below the wavelength grid (9). If the pump wavelength is about 100 nm below the shortest wavelength channel of the WDM grid the channel λ₁ has the greatest benefit of the Raman gain from the Raman pumping. In the same time the longest wavelength channel λₙ will have the lowest Raman gain.

Figure 2b describes another possible embodiment of the invention. The Raman pump wavelength is higher than the longest wavelength channel λₙ. In that case the power of the channels will be reduced by the pumping light. For example the pump wavelength is about 114 nm above the longest wavelength channel λₙ. This channel will be more depleted by the pump than the shortest wavelength λ₁. This pump scheme can also be used to compensate the inter-channel depletion. The resulting power of the channel grid is lower than in the first described embodiment. It is advantageous that this pumping scheme reduces the transmission degradation due to non-linear effects for all channels are working at low powers.

The pump source (8) can consist of one laser with one wavelength or for a better adaptation on a wavelength division multiplex system or a couple of lasers with different wavelengths and different laser powers.

## Claims

1. WDM transmission system comprising transmitters (2) for generating optical signals in different channels, a multiplexer (3) for combining said optical signals into a WDM signal, a transmission line (4) for transmitting said WDM signal, a demultiplexer (6) for demultiplexing the WDM signal received from the transmission line (4) and receivers (7) for receiving the optical signals of each channel, the signal having a plurality of wavelength channels (λ₁...λₙ) with a wavelength channel being the shortest (λ₁) and a wavelength channel being the longest(λₙ), the system further comprising a Raman depletion compensator (8) comprising an optical pump (8) coupled to the transmission line and adapted for pumping in propagation direction of the transmission system, for compensating the depletion due to Roman-shift in the power of the wavelength grid spectrum,
**characterized in that**:
- the pump (8) is adapted for pumping in a wavelength which is below the shortest wavelength channel (λ₁) by a first predetermined value which is higher than 100 nm; or
- the pump (8) is adapted for pumping in a wavelength which is above the longest wavelength channel (λₙ) by a second predetermined value which is about or higher than 114 nm.

2. Transmission system according to claim 1, **characterized in that** the optical pump (8) is connected to an input of the multiplexer (3).

3. Transmission system according to claim 1, **characterized in that** the optical pump (8) is directly coupled to the transmission line (4) through an optical coupler.

## Patentansprüche

1. WDM-Ubertragungssystem mit Sendern (2) zum Erzeugen von optischen Signalen in verschiedenen Kanalen, einem Multiplexer (3) zum Kombinieren der besagten optischen Kanale in ein WDM-Signal, einer Ubertragungsleitung (4) zum Ubertragen des besagten WDM-Signals, einem Demultiplexer (6) zum Demultiplexen des von der Ubertragungsleitung (4) empfangenen WDM-Signals, und Empfängern (7) zum Empfangen der optischen Signale eines jeden Kanals, wobei das Signal eine Vielzahl von Wellenlangenkanalen (λ₁, ... λₙ) aufweist, wobei ein Wellenlängenkanal der kurzeste (λ₁) und ein Wellenlängenkanal der langste (λₙ) ist, wobei das System weiterhin einen Ramanerschopfungs-Kompensator (8) mit einer optischen Pumpe (8) umfasst, welche an die Ubertragungsleitung gekoppelt und fahig ist, in Ausbreitungsrichtung des Ubertragungssystems zu pumpen, um die von der Raman-Verschiebung in der Leistung des Wellenlangengitterspektrums verursachte Erschopfung auszugleichen, **dadurch gekennzeichnet, dass**
- die Pumpe (8) fahig ist, in einer Wellenlänge zu pumpen, welche um einen ersten vorbestimmten Wert von mehr als 100 nm unter dem kurzesten Wellenlangenkanal (λ₁) liegt, oder
- die Pumpe (8) fahig ist, in einer Wellenlänge zu pumpen, welche um einen zweiten vorbestimmten Wert von rund oder mehr als 114 nm uber dem kurzesten Wellenlangenkanal (λₙ) liegt

2. Ubertragungssystem nach Anspruch 1, **dadurch gekennzeichnet, dass** die optische Pumpe (8) an einen Multiplexereingang (3) angeschlossen ist

3. Ubertragungssystem nach Anspruch 1, **dadurch gekennzeichnet, dass** die optische Pumpe (8) uber einen optischen Koppler direkt an die Ubertragungsleitung (4) gekoppelt ist

## Revendications

1. Système de transmission WDM comprenant des émetteurs (2) pour générer des signaux optiques dans différents canaux, un multiplexeur (3) pour combiner lesdits signaux optiques en un signal WDM, une ligne de transmission (4) pour transmettre ledit signal WDM, un démultiplexeur (6) pour démultiplexer le signal WDM reçu de la ligne de transmission (4) et des récepteurs (7) pour recevoir les signaux optiques de chaque canal, le signal ayant une pluralité de canaux de longueur d'onde (λ₁ ... λ*ₙ*) comprenant un canal de longueur d'onde le plus court (λ₁) et un canal de longueur d'onde le plus long (λ*ₙ*), le système comprenant en outre un compensateur d'épuisement Raman (8) comprenant une pompe optique (8) couplée à la ligne de transmission et apte à pomper dans la direction de propagation du système de transmission, pour compenser l'épuisement dû au décalage Raman dans la puissance du spectre de la grille de longueur d'onde, **caractérisé en ce que**
- la pompe (8) est apte à pomper dans une longueur d'onde qui est inférieure au canal de longueur d'onde le plus court (λ₁) d'une première valeur prédéterminée qui est supérieure à 100 nanomètres , ou
- la pompe (8) est apte à pomper dans une longueur d'onde qui est supérieure au canal de longueur d'onde le plus long (λ*ₙ*) d'une seconde valeur prédéterminée qui est d'environ ou supérieure à 114 nanomètres

2. Système de transmission selon la revendication 1, **caractérisé en ce que** la pompe optique (8) est reliée à une entrée du multiplexeur (3)

3. Système de transmission selon la revendication 1, **caractérisé en ce que** la pompe optique (8) est directement couplée à la ligne de transmission (4) par l'intermédiaire d'un coupleur optique
